**Europäisches Patentamt**

**European Patent Office**

**Office européen des brevets**

(19)

(11) Numéro de publication : **0 511 127 A1**

# (12) DEMANDE DE BREVET EUROPEEN

(21) Numéro de dépôt : **92420120.5**

(22) Date de dépôt : **14.04.92**

(51) Int. Cl.$^5$ : **C08K 5/10, B65D 65/38**

(30) Priorité : **22.04.91 FR 9105427**

(43) Date de publication de la demande :
**28.10.92 Bulletin 92/44**

(84) Etats contractants désignés :
**BE CH DE DK ES GB IT LI LU NL**

(71) Demandeur : **POLYCONCEPT Sàrl**
**11 Rue Richan**
**F-69004 Lyon (FR)**

(72) Inventeur : **Lagneaux, Didier**
**3 Rue Denuits**
**F-69004 Lyon (FR)**

(74) Mandataire : **Dupuis, François et al**
**Cabinet Laurent et Charras, 3 Place de**
**l'Hôtel-de-Ville, BP 203**
**F-42005 St. Etienne Cédex 1 (FR)**

(54) **Film d'emballage.**

(57)    Le film d'emballage est remarquable en ce qu'il est fabriqué à partir d'un mélange à base de copolymères Butadiène-styrene, amorphes auxquels est ajouté un monostérate de glycérol, le film obtenu à partir de ce mélange présentant un caractère anti-buée.

EP 0 511 127 A1

L'invention se rattache au secteur technique des films d'emballage.

Les films de présentation sont utilisés pour protéger et mettre en valeur les articles qu'ils emballent. Si ces articles dégagent beaucoup de vapeur d'eau et de gaz carbonique, il se crée une couche de buée à l'intérieur de l'enveloppe plastique définie par le film. Si les produits dégagent une forte quantité de vapeur d'eau et en plus sont soumis à de fortes variations de température, des gouttelettes de condensation peuvent se former individuellement sur le film d'emballage.

Le but recherché selon l'invention était donc de concevoir un film d'emballage évitant ce phénomène de condensation et d'apparition de buée, ce qui est particulièrement nuisible à l'aspect de l'emballage et qui peut, pour le consommateur non averti, entraîner un phénomène de rejet.

Un autre but, partant du constat précité, était de concevoir un nouveau film d'emballage en vue des mêmes applications dont les propriétés et caractéristiques seraient, à titre complémentaire, très superieures à celles des films d'emballage existants en polyéthylène ou à base de polypropylène.

Ces buts et d'autres sont atteints par la nouvelle conception du film d'emballage selon l'invention qui offre de nombreux avantages en particulier d'être antibuée.

Selon une première caractéristique de l'invention, le film d'emballage est remarquable en ce qu'il est fabriqué à partir d'un mélange à base de copolymères Butadiène-styrene amorphes auxquels est ajouté un monostearate de glycérol, le film obtenu à partir de ce mélange présentant un caractère anti-buée.

Selon une autre caractéristique, le monostéarate de glycérol est ajoute au copolymère Butadiène-styrène à raison de 1.000 à 10.000 PPM.

Le film obtenu selon l'invention présente ainsi de très nombreux avantages. Ainsi, l'ensemble du mélange précité permet d'obtenir un film qui se soude et se rétracte aux mêmes températures que celui connu dans le commerce sous la dénomination "PVC" et de 40° à 50°C en-dessous des autres produits réalisés à partir de polyéthylène ou polypropylène. De ce fait, sa vitesse et son pourcentage de rétraction lui permettent d'épouser l'objet comme une deuxième peau et sa force de rétraction est suffisamment légère pour ne pas déformer le contenu (barquettes plastiques, paquets de feuilles, etc...).

Selon un autre avantage de l'invention, la constitution du film lui permet d'empêcher la formation des gouttelettes en étalant la masse condensée en un film d'eau uniforme et invisible à la surface du film. Lorsqu'une couche d'eau est en contact avec le film selon l'invention, la perméabilité de la matière le constituant permet à l'eau de s'évaporer et ainsi de disparaître de l'emballage. Le produit ainsi emballé respire naturellement. Le film est par ailleurs perméable aux autres gaz.

Par ailleurs et selon une autre particularité du film d'emballage selon l'invention, un produit protégé dans un film emballage selon l'invention peut être stérilisé par rayons Gamma et Beta car la résistance du film aux photons et aux électrons est excellente. Dans la matière, les noyaux aromatiques absorbent l'énergie des photons et des électrons, ce qui permet de ne pas changer la structure moléculaire du film à des doses 2 à 3 fois superieures aux doses de stérilisation standard qui sont de 25 Kg Grey environ. Le film selon l'invention, de par sa perméabilité, est fortement conseillé pour emballer des produits devant être stérilisés par oxyde d'éhylène car sa perméabilité permet une rapide désorbtion de ce gaz toxique.

Selon un autre avantage du film d'emballage selon l'invention, tous ces constituants sont recyclables, alimentaires et incinérables. Il n'existe aucune présence de chlore.

Un autre avantage du film réside en ce qu'il présente un caractère anticollant avec les films de suremballage thermo-rétractables dont les plus utilisés en polyéthylène sont totalement incompatibles avec le film de l'invention.

En outre, le film selon l'invention étant réalisé à partir de copolymères butadiène-styrène amorphes, il présente une transparence et une brillance particulièrement performante en égard des produits classiques mis sur le marché.

Selon une autre caractéristique et propriété du film selon l'invention, le taux de gonflage de 1 à 5, ainsi que les températures d'orientation de 100 à 150°C lui permettent d'avoir un effet mémoire en température (thermo-rétractabilité) très rapide et équilibré dans les deux sens (transversal et longitudinal).

Toutes les caractéristiques et propriétés du film selon l'invention permettent d'emballer différents types de produits alimentaires, tels que fruits et légumes, pâtisseries fraîches, biscuits, surgelés et tous aliments en barquettes.

Il est précisé ci-après les propriétés mesurées du film emballage selon l'invention d'une épaisseur de 15 microns, selon le tableau 1 ci-dessous :

TEST

| | | |
|---|---|---|
| Taux de gonflage | | 2,5 |
| Rapport d'orientation | | 21,3 |
| Résistance à l'impact, à 66 cm, g | | 300 |
| Résistance à la déchirure amorcée, g | MD | 11,9 |
| | TD | 13 |
| Limite élastique, KG/Cm2 | MD | 279 |
| | TD | 200 |
| Résistance à la rupture, kg/cm2 | MD | 283 |
| | TD | 287 |
| Allongement à la rupture, % | MD | 110 |
| | TD | 141 |
| Rétraction | MD | 62 |
| | TD | 60 |
| Trouble | | 0,96 |
| Transmission de la lumière | | 95 |
| Température soudure | | de 110 à 150°C |
| rétraction | | de 120° à 190°C |
| Perméabilité à l'oxygène | | |
| ASTMD 1434 | | 260.000 cc/micron m2 24h |
| Perméabilité à la vapeur d'eau | | |
| ASTMD 96/E | | 5.600 g/micron m2 24h |
| Perméabilité au gaz carbonique | | |
| ASTMD 1434 | | 698.000 cc/micron m2 24h |

Nota : les perméabilités doivent être divisées par 15 pour obtenir les chiffres de la perméabilité du film selon l'invention

Les avantages ressortent bien de l'invention ainsi rappelée.

**Revendications**

-1- Film d'emballage, caractérisé en ce qu'il est fabriqué à partir d'un mélange à base de copolymères Butadiène-styrene amorphes auxquels est ajouté un monostéarate de glycérol, le film obtenu à partir de ce mélange présentant un caractère anti-buée.

-2- Film selon la revendication 1, caractérisé en ce que le monostéarate de glycérol est ajouté au copolymère Butadiène-styrène à raison de 1.000 à 10.000 PPM.

Office européen
des brevets

**RAPPORT DE RECHERCHE EUROPEENNE**

Numero de la demande

EP    92 42 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CHEMICAL ABSTRACTS, vol. 85, no. 16, 18 Octobre 1976, Columbus, Ohio, US; abstract no. 109446F, page 35 ; colonne 2 ; & JP-A-7 655 352 (DENKI KAGAKU KOGYO) 15 Mai 1976 * abrégé * | 1,2 | C08K5/10 B65D65/38 |
| | --- | | |
| A | CHEMICAL ABSTRACTS, vol. 81, no. 14, 7 Octobre 1974, Columbus, Ohio, US; abstract no. 78795E, page 42 ; colonne 1 ; & JP-A-7 420 254 (DENKI KAGAKU KOGYO) 22 Février 1974 * abrégé * | 1,2 | |

-----

**DOMAINES TECHNIQUES RECHERCHES (Int. Cl.5)**

B65D
C08K

Le présent rapport a été établi pour toutes les revendications

| Lieu de la recherche | Date d'achèvement de la recherche | Examinateur |
|---|---|---|
| BERLIN | 16 JUILLET 1992 | SMITH C.A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)

4